# EUROPEAN PATENT APPLICATION

(11) **EP 4 838 470 A1**
(43) Date of publication of application: **11.11.2026**
(21) Application number: 25305651.9
(22) Date of filing: 07.05.2025
(51) Int. Cl.: G06T 9/00, G06N 3/045, H04N 19/119

(54) **IMPLICIT DATA PARTITIONING FOR A HYBRID INR NETWORK**

(71) Applicant: InterDigital CE Patent Holdings, SAS, 75017 Paris (FR)
(72) Inventor: SCHNITZLER, Francois, 56890 SAINT AVE (FR); CHEN, Ya, 35700 RENNES (FR); LAMBERT, Anne, 35250 SAINT-AUBIN-D'AUBIGNE (FR)
(74) Representative: Rittner, Karsten

(57) **Abstract**

Apparatuses and methods are disclosed for encoding and decoding data. The encoding comprises partitioning data into partitions and assigning, to each of the partitions, a configuration of network(s). A hybrid INR network is then trained to produce the data from latent variables. Following training, using a partitioning technique, the data are repartitioned based on the learned latent variables. For each partition, the configuration assigned to the partition and the parameters of network(s) of that configuration are coded into a bitstream as well as the latent variables and information indicating the partitioning technique. The decoding comprises decoding from the bitstream the latent variables and the information indicating the partitioning technique. Based on the latent variables, data to be decoded are partitioned into partitions using the partitioning technique. For each partition, (i) the configuration assigned to the partition and the parameters of network(s) of that configuration are decoded from the bitstream and (ii) data confined by the partition are produced from latent variables corresponding to the partition, by the assigned configuration using the parameters of its network(s).

## Description

### BACKGROUND

A hybrid implicit neural representation (INR) network is trained to predict data based on latent variables. These latent variables are learned, together with parameters of networks employed by the hybrid INR network, to represent the data as a whole. However, data capturing real-world or computer-generated scenes are typically composed of data regions having different characteristics. Therefore, it may be advantageous to learn these regions through respective latent variables and through the parameters of respective networks. Yet, clustering the data into regions that would be predicted by training respective networks comes with new challenges. To improve the performance of such hybrid INR networks, techniques are needed to implicitly and dynamically cluster the data and efficiently inform the decoder about the clusters used by the encoder.

### SUMMARY

Aspects disclosed in the present disclosure describe methods for encoding data. These methods include partitioning data to be encoded into partitions and assigning, to each of the partitions, a configuration including one or more networks. A hybrid INR network is then trained to produce the data from latent variables. The training includes determining, for each partition, a subset of the latent variables corresponding to the partition and parameters of one or more networks of the configuration assigned to the partition. Following training, using a partitioning technique, the data are repartitioned based on the latent variables. Then, for each partition, the configuration assigned to the partition and the parameters of the one or more networks of that configuration are coded into a bitstream. Additionally coded into the bitstream are the latent variables and information indicating the partitioning technique.

Aspects disclosed in the present disclosure also describe methods for decoding data. These methods include decoding from a bitstream latent variables and information indicating a partitioning technique. Based on the latent variables, data to be decoded are partitioned into partitions using the partitioning technique. Then, for each partition, (i) a configuration assigned to the partition and parameters of one or more networks of that configuration are decoded from the bitstream and (ii) data confined by the partition are produced from a subset of the latent variables corresponding to the partition, by the configuration assigned to the partition using the parameters of the one or more networks of that configuration.

Aspects disclosed in the present disclosure describe apparatuses for encoding data. The apparatuses comprise at least one processor and memory storing instructions. The instructions, when executed by the at least one processor, cause the apparatuses to perform the following. Data to be encoded are partitioned into partitions and, to each of the partitions, a configuration including one or more networks is assigned. A hybrid INR network is then trained to produce the data from latent variables. The training includes determining, for each partition, a subset of the latent variables corresponding to the partition and parameters of one or more networks of the configuration assigned to the partition. Following training, using a partitioning technique, the data are repartitioned based on the latent variables. Then, for each partition, the configuration assigned to the partition and the parameters of the one or more networks of that configuration are coded into a bitstream. Additionally coded into the bitstream are the latent variables and information indicating the partitioning technique.

Aspects disclosed in the present disclosure also describe apparatuses for decoding data. The apparatuses comprise at least one processor and memory storing instructions. The instructions, when executed by the at least one processor, cause the apparatuses to perform the following. Latent variables and information indicating a partitioning technique are decoded from a bitstream. Based on the latent variables, data to be decoded are partitioned into partitions using the partitioning technique. Then, for each partition, (i) a configuration assigned to the partition and parameters of one or more networks of that configuration are decoded from the bitstream and (ii) data confined by the partition are produced from a subset of the latent variables corresponding to the partition, by the configuration assigned to the partition using the parameters of the one or more networks of that configuration.

Aspects disclosed in the present disclosure describe a non-transitory computer-readable medium comprising instructions executable by at least one processor to perform methods for encoding data. These methods include partitioning data to be encoded into partitions and assigning, to each of the partitions, a configuration including one or more networks. A hybrid INR network is then trained to produce the data from latent variables. The training includes determining, for each partition, a subset of the latent variables corresponding to the partition and parameters of one or more networks of the configuration assigned to the partition. Following training, using a partitioning technique, the data are repartitioned based on the latent variables. Then, for each partition, the configuration assigned to the partition and the parameters of the one or more networks of that configuration are coded into a bitstream. Additionally coded into the bitstream are the latent variables and information indicating the partitioning technique.

Aspects disclosed in the present disclosure also describe a non-transitory computer-readable medium comprising instructions executable by at least one processor to perform methods for decoding data. These methods include decoding from a bitstream latent variables and information indicating a partitioning technique. Based on the latent variables, data to be decoded are partitioned into partitions using the partitioning technique. Then, for each partition, (i) a configuration assigned to the partition and parameters of one or more networks of that configuration are decoded from the bitstream and (ii) data confined by the partition are produced from a subset of the latent variables corresponding to the partition, by the configuration assigned to the partition using the parameters of the one or more networks of that configuration.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

FIG. 1 is a block diagram of an example system, according to which aspects of the present embodiments can be implemented.
FIG. 2 is a diagram illustrating an example INR network, according to which aspects of the present embodiments can be implemented.
FIG. 3 is a block diagram of an example video encoder, according to which aspects of the present embodiments can be implemented.
FIG. 4 is a block diagram of an example video decoder, according to which aspects of the present embodiments can be implemented.
FIG. 5 is a diagram illustrating a hybrid INR network, according to which aspects of the present embodiments can be implemented.
FIG. 6 is a block diagram illustrating an example video encoder applying a hybrid INR network, according to which aspects of the present embodiments can be implemented.
FIG. 7 is a block diagram illustrating an example video decoder applying a hybrid INR network, according to which aspects of the present embodiments can be implemented.
FIG. 8 is a block diagram illustrating prediction of a latent variable distribution, using a spatial context, according to which aspects of the present embodiments can be implemented.
FIG. 9 is a block diagram illustrating the assignment of a configuration to a partition of data to be encoded, according to which aspects of the present embodiments can be implemented.
FIG. 10 is a diagram illustrating a first partitioning technique, according to which aspects of the present embodiments can be implemented.
FIG. 11 is a diagram illustrating a second partitioning technique, according to which aspects of the present embodiments can be implemented.
FIG. 12 is a block diagram illustrating an example video encoder applying an extended hybrid INR network, according to which aspects of the present embodiments can be implemented.
FIG. 13 is a block diagram illustrating an example video decoder applying an extended hybrid INR network, according to which aspects of the present embodiments can be implemented.
FIG. 14 is a flowchart of an example method for encoding data, according to which aspects of the present embodiments can be implemented.
FIG. 15 is a flowchart of an example method for decoding data, according to which aspects of the present embodiments can be implemented.

### DETAILED DESCRIPTION

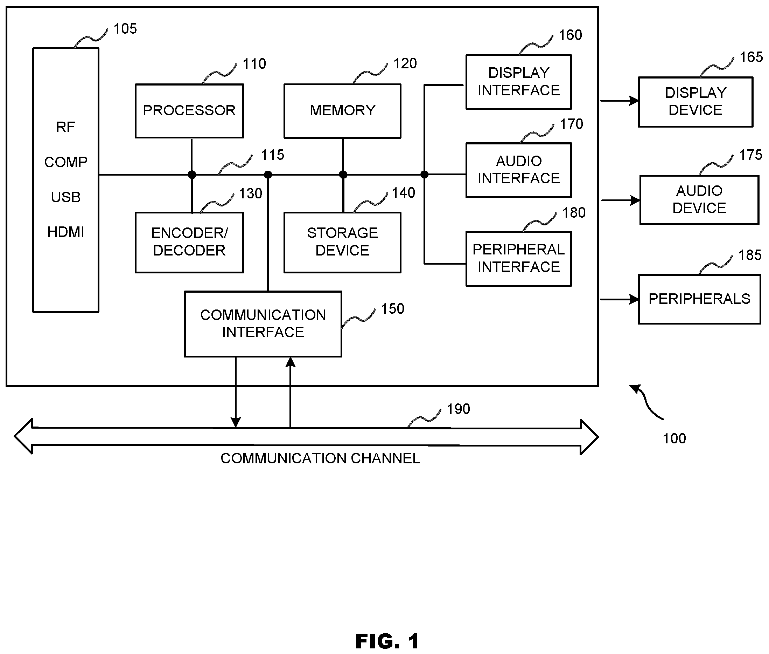

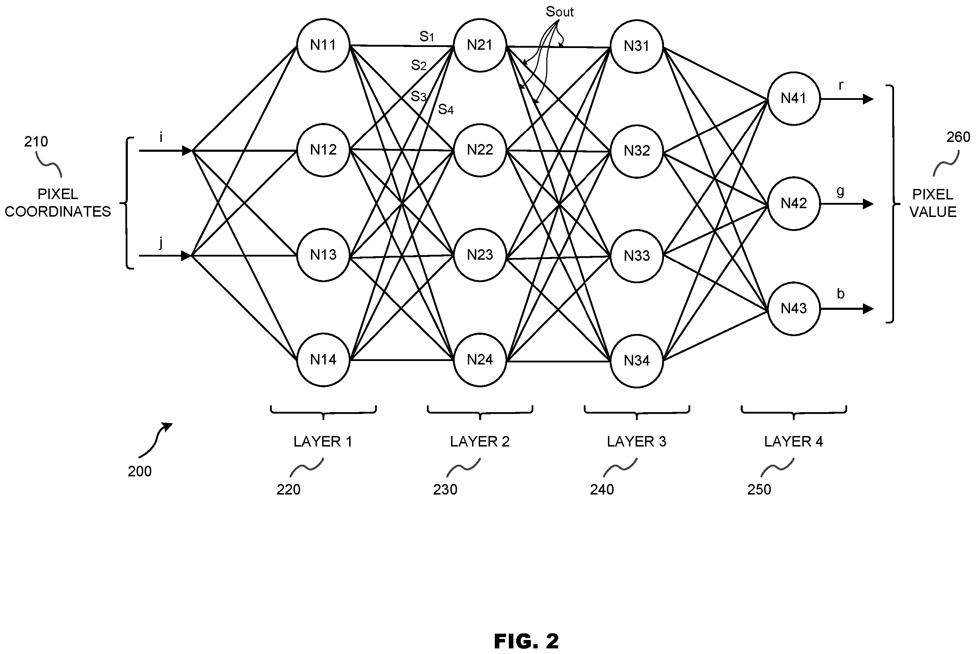

Apparatuses and methods are described herein for encoding and decoding data applying a hybrid INR network. A system for processing and displaying content, with which various aspects and examples described herein may be implemented, is generally described in reference to FIG. 1, followed by a description of the aspects of the present disclosure in reference to FIGS. 2-15.

FIG. 1 is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. In contrast, an autoencoder is a neural network that is trained to map input images (video frames) into respective sets of latent variables and then map back those sets of latent variables to approximate versions of the input images. During training, the autoencoder parameters are optimized to minimize a rate-distortion cost function. Thus, using a trained autoencoder, encoding an image involves mapping the image into a set of latent variables and decoding the image involves mapping that set of latent variables into a reconstructed version of the image. Since autoencoders are generically trained (that is, their training is based on a large number of images), to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For the simplicity of the presentation, aspects of INR network applications are described herein with respect to images (e.g., video frames); however, these aspects are extendable to other data frames, such as those representing surfaces of objects (e.g., hologram) and volumetric data that may be changing overtime.

FIG. 2 is a diagram illustrating an example INR network 200. An INR network is a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values (*i*, *j*) 210 of a pixel x and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel *x,* respectively, *r*, *g*, and *b* (or color component values of any other color model, such as *y, u*, and *v*)*.*

Each node in the network 200 represents an operator that generates an output signal based on the node's inputs. For example, node N21 of the second layer 230 receives as an input the output signals of nodes N11, N12, N13, and N14, respectively, *s*₁, *s*₂, *s*₃, and *s*₄. These inputs are translated into an output signal *sₒᵤₜ* that feeds the nodes of the third layer 240. A node's operator can be expressed as follows: ${s}_{out} = A \left({p}_{0}+{\sum }_{i = 1}^{L} {p}_{i} ⋅ {s}_{i}\right) ,$ (1) where, *L* denotes the number of input signals (i.e., the number of nodes from the previous layer that connect to the node), *s =* {*sᵢ : i* = 1 *to L*} denotes the node's input signal vector, *sₒᵤᵣ* denotes the node's output signal, *p* = {*pᵢ* : *i* = 0 *to L*} denotes the node's parameter vector (or weight vector), and *A* denotes an activation function (e.g., ReLU, Sigmoid, or Tanh). The weight vectors (and parameters of the activation functions, if such parameters exist) of respective nodes are collectively referred to as the parameters *θ* of the network 200. These parameters *θ* are determined through a training process. The network operation, denoted by *f_{θ},* is therefore defined by the network parameters *θ*.

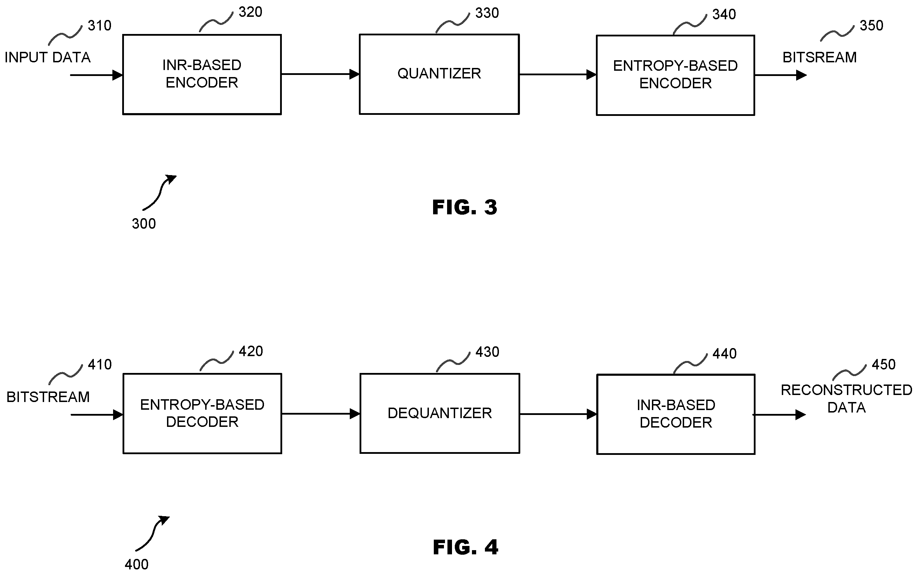

Hence, an INR network 200 is trained to predict a pixel value of an image, ***x***(*i*, *j*), based on the pixel's coordinates *(i,j)* - that is, *f_{θ}*(*i*, *j*) = (*r, g, b*) (or *f_{θ}*(*i, j*) = (*y, u, v*)). During a training phase of an INR network 200, the parameters *θ* (or a subset of them) are determined. This is done via an optimization process through which the parameters *θ* that minimize a cost function can be determined. For example, the following cost function can be used: $Cost = D \left(x, {f}_{θ}\right) + λR \left(θ\right)$ (2) where, *D* is a distortion, measuring the fidelity of the estimated pixel values, provided by *f**_{θ}**,* relative to the ground truth, that is, the corresponding pixel values from the original image, denoted by ***x**.* And, where *R* is the resulting bitrate of the encoded parameters *θ* (e.g., encoded by quantization and entropy coding as discussed with respect to FIG. 3). A trade-off parameter *λ* can be set to determine the balance between *D* and *R.* Note that the distortion *D* can be any metric that measure the distance (or similarity) between the original image x and its estimated version provided by *f_{θ},* such as a mean squared error metric or a learned perceptual image patch similarity (LPIPS) metric. For example, a mean squared error metric can be expressed as: ${D}_{MSE} = \frac{1}{WH} {\sum }_{i ∈ W , j ∈ H} {\left(x\left(i, j\right)-{f}_{θ}\left(i, j\right)\right)}^{2} ,$ (3) where, *W* and *H* are the width and height of the image ***x*** that the INR network is trained to predict. The optimization of the network parameters *θ*, according to equation (2), is typically performed by a machine learning optimization technique, applying, for example, a batch gradient descent algorithm. Following the training of the hybrid INR network 200 and using the optimal parameters *θ* (obtained via the optimization process), the INR network can be applied to predict a pixel value based on its corresponding coordinate values.

Using INR networks for the application of encoding and decoding images is further described with respect to FIGS. 3 and 4.

FIG. 3 is a block diagram of an example video encoder 300. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function *f_{θ},* representative of the INR network, to determine the optimal network parameters *θ*. For example, for an input image with dimensions *W* and *H, W* times *H* pairs of pixel coordinates *(i,j)* and corresponding pixel values *x*(*i ,j*) can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

FIG. 4 is a block diagram of an example video decoder 400. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate *f_{θ}* using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions *W* = 256 by *H* = 256 based on the corresponding coordinates. At the decoder 400, pixel values of the image can be predicted by evaluating the trained INR network using: 1) the full coordinate set used for training, including all pairs of *i* ∈ 0,1, ...,255 and *j* ∈ 0,1, ...,255; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

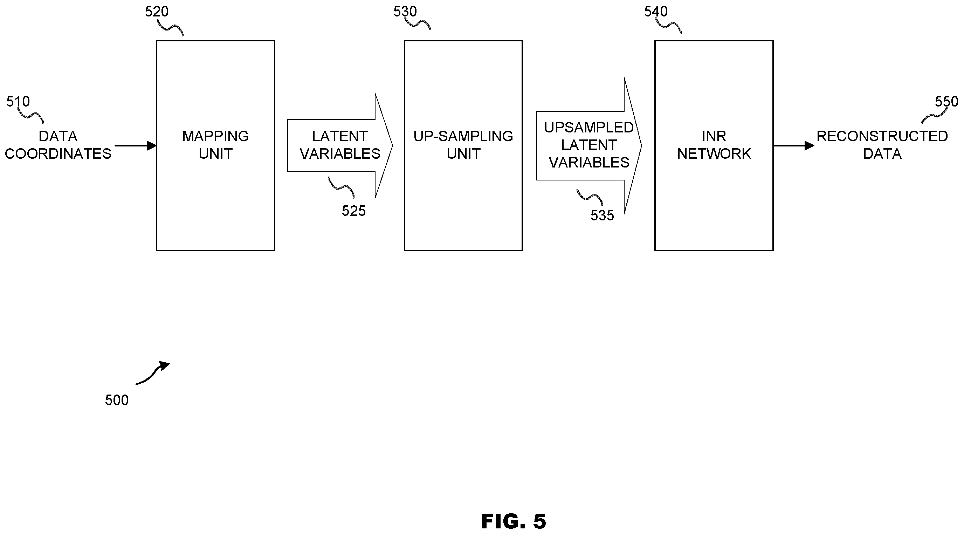

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

FIG. 5 is a diagram illustrating a hybrid INR network 500. In an aspect, this hybrid INR network 500 can be applied by the INR-based encoder 320 of FIG. 3 and the INR-based decoder 440 of FIG. 4. In the example of FIG. 5, during the encoding of input data (that is, the training of the hybrid INR network 500), the input data's coordinates 510 are first mapped, by a mapping unit 520, into latent variables 525. The mapping can be implemented by a lookup table or a hash function, for example. The mapping may also involve any transformation, such as a Fourier transformation, a coordinate transformation, a normalization transformation, or a combination thereof. The obtained latent variables 525 can then be upsampled, by an up-sampling unit 530, resulting in upsampled latent variables 535. The upsampled latent variables are used as an input to an INR network 540 (e.g., such as INR network 200) that is trained to produce the reconstructed data 550. In a hybrid INR network 500 the latent variables 525 can be trained together with the parameters *θ* of the INR network 540, resulting in optimal (learned) network parameters and latent variables. Using such an architecture helps in handling the local attributes of the input data. Indeed, a group of latent variables that correspond to a given region of the data may be uncorrelated with other groups of latent variables that correspond to other regions of the data, and, thus, different groups of latent variables can be tailored to (or be characteristic of) corresponding regions of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

A hybrid INR network, named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image).

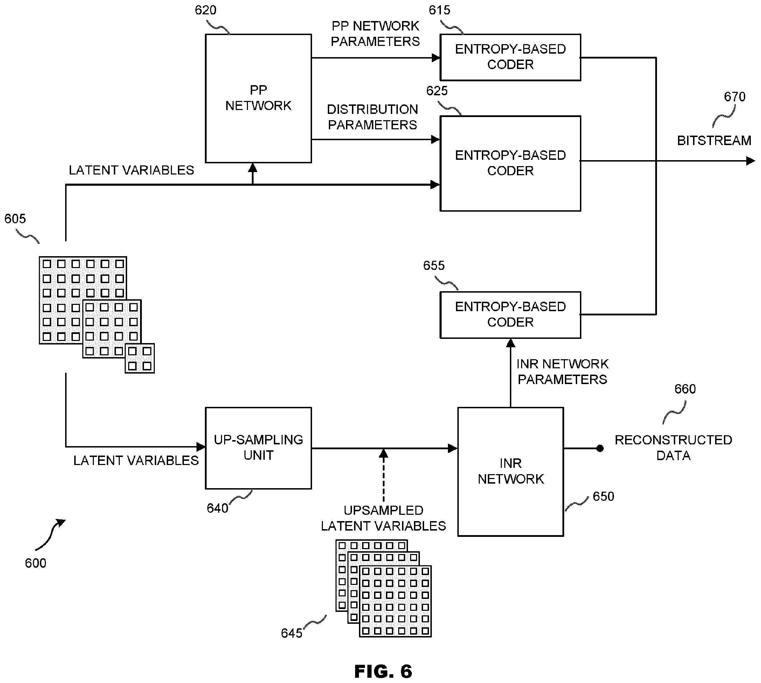

In hybrid INR networks, the latent variables, denoted by *y*, are typically the largest contributor to the bitrate (several orders of magnitude larger than that contributed by the INR network parameters). One approach to reduce the transmission cost of these latent variables is to entropy code these variables based on their learned distributions, as described in Ladune. Principles of the hybrid INR network proposed in Ladune are described below in reference to FIGS. 6-8.

FIG. 6 is a block diagram illustrating an example video encoder 600 applying a hybrid INR network. The encoder 600 includes a probability prediction (PP) network 620, an up-sampling unit 640, an INR network 650, and entropy-based coders 615, 625, 655. The encoder 600 is configured to process latent variables 605 (e.g., latent variables 525 generated by the mapping unit 520 of FIG. 5). The encoder 600 up-samples, by the up-sampling unit 640, the latent variables. Based on these upsampled latent variables 645 the INR network 650 produces reconstructed data 660 (e.g., a reconstructed image of a video frame). To that end, the hybrid INR network is trained, learning optimal latent variables and INR network parameters so that a coding cost is minimized. The learned INR network parameters *θ* are coded, by the entropy-based coder 655, into the bitstream 670. In addition to the network parameters *θ*, the latent variables need to be coded into the bitstream 670. As further explained below, due to their large bit representation, efficient coding of the latent variables calls for the estimation of their distributions. To achieve coding efficiency therefore, the encoder 600 can be further configured to learn the distributions of respective latent variables using the PP network 620 - that is, a network trained to produce parameters of distributions of respective latent variables. Based on these learned distribution parameters the entropy-based coder 625 codes the latent variables into the bitstream 670. The PP network is defined by PP network parameters, denoted by ψ, determined during the training of the PP network 620. The entropy-based coder 615 codes these PP network parameters into the bitstream 670. Note that in the example of FIG. 6, while the entropy-based coder 625 that codes the latent variables relies on their learned respective distributions, the other entropy-based coders 615, 655 that code the PP network parameters and the INR network parameters may rely on respective non-learned distributions. In an aspect, for some of the latent variables, respective non-learned distributions can be used by the entropy-based coder 625. These non-learned distributions may be fixed distributions or may be distributions that was learned with respect to other latent variables (e.g., latent variables representing data from previous frames or other data regions).

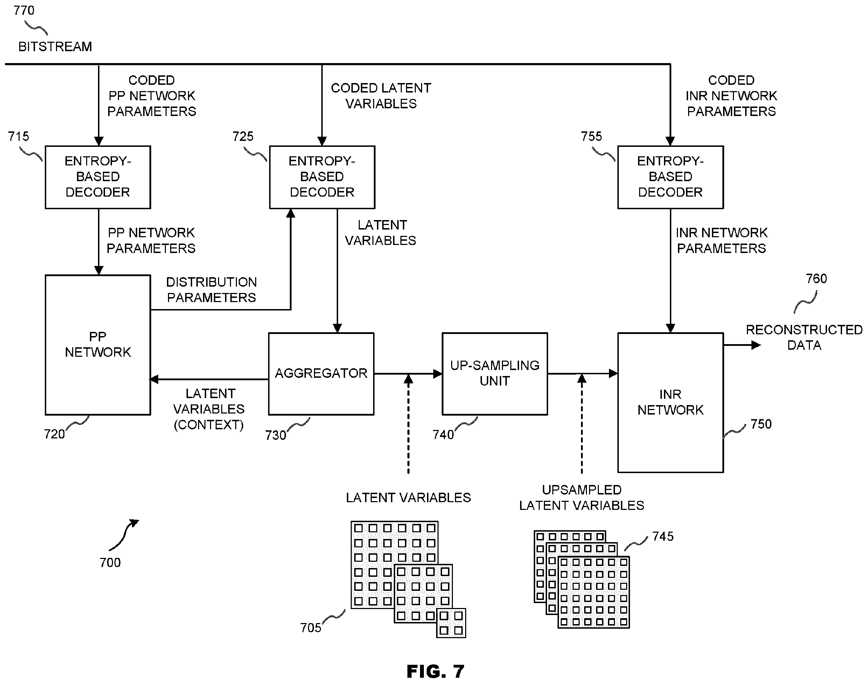

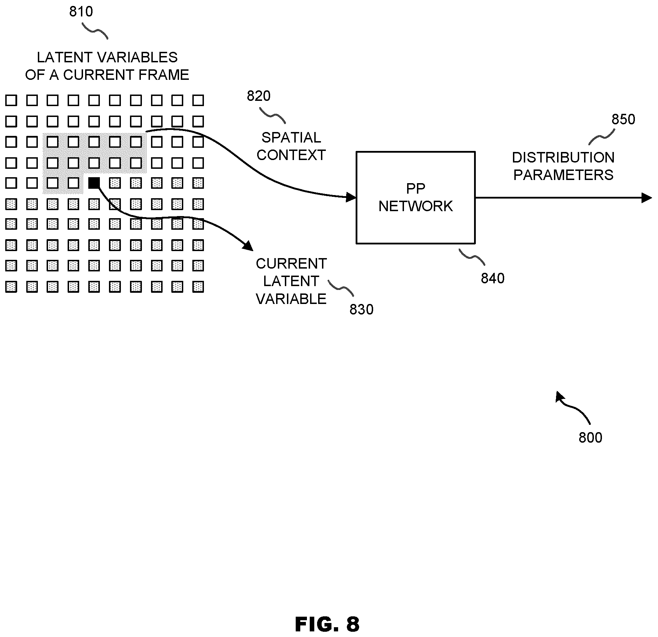

FIG. 7 is a block diagram illustrating an example video decoder applying a hybrid INR network 700. The decoder 700 includes a PP network 720, an aggregator 730, an up-sampling unit 740, an INR network 750, and entropy-based decoders 715, 725, 755. The PP network 720 produces distribution parameters (i.e., distributions) of respective latent variables. The PP network 720 operates based on learned PP network parameters ψ, determined during the training of the PP network 620. The entropy-based decoder 715 decodes these PP network parameters from the bitstream 770. Based on the produced 720 distributions, the entropy-based decoder 725 decodes the latent variables from the bitstream 770. These latent variables are aggregated, by the aggregator 730, forming the layers of the latent variables 705. As shown, already decoded latent variables are provided by the aggregator 730 to the PP network 720 to serve as a context in producing the distribution parameters of the currently decoded 725 latent variable (as further described in reference to FIG. 8). The aggregated latent variables 705 are then upsampled by the up-sampling unit 740. Fed by the up-sampled latent variables, the INR network 750 reconstructs the data 760 (e.g., a reconstructed image of a video frame) it is trained to synthesize based on the INR network parameters, decoded from the bitstream 770 by the entropy-based decoder 755.

The operation of the hybrid INR network is further explained with respect to an image *x* of a video frame, however, *x* may represent other types of data (such as a surface or a volume) that can be associated with a frame. Note that latent variables representative of data regions (e.g., pixels) from a data frame (e.g., a video frame) also correspond to that data frame.

As illustrated, the INR network 650, 750 utilizes a hierarchical representation of latent variables that includes multiple layers of different spatial resolutions 605, 705. Each layer represents an image ***x**,* of a width *W* and of a height *H,* with a corresponding level of detail. Formally, the discrete latent variables, denoted by *ŷ*, can include *K* layers of latent variables: *ŷ* = {*ŷₖ,k = 0: (K -* 1)}. Each layer *ŷₖ* is of width *W*/2*^{k}* and of height *H*/2*^{k}.* During the up-sampling 640, 740, each layer *ŷₖ* may be upsampled by a factor of 2*^{k}* (using any interpolation method) to obtain the upsampled layer version, denoted by *ẑₖ*. Together, the upsampled layers, *ẑ* = {*ẑₖ,k* = 0: (*K* - 1)}, result in a dense 3D representation 645, 745 of dimension *W* by *H* by *K.* Thus, the INR network 650 can be trained based on *W* by *H* inputs of *ẑ*(i, j), where each input can include up to *K* latent variables, that is, *ẑ*(i, j) = {*ẑ*(i, j, *k*), *k = 0: (K* - 1))}. And the trained INR network 750 can be used to predict a reconstructed pixel *x̂*(*i*, *j*), of the original pixel *x*(*i, j*), based on *ẑ*(i, j), that is, ***x̂***(*i*, *j*) *= f**_{θ}***(*ẑ*(*i*, *j*)). In an aspect, depending on the desired bitrate, not all the layers of the latent variables may be used to represent (code) an image ***x**.*

When compressing an image ***x**,* the goal is to do so while minimizing a coding cost, as discussed with respect to equation (2). In the case of a hybrid INR network, the cost of coding an image can be expressed by the following cost function: $Cost = D \left(x,{f}_{θ}\left(\hat{z}\right)\right) + λR \left(\hat{y}, θ, ψ\right) ,$ (4) where ***x*** denotes an image to be coded of *H* hight, *W* width, and *F* color channels; where *ŷ* denotes the quantized latent variables and *ẑ* denotes their upsampled version; where *f_{θ}* denotes the INR network 650, 750 and *θ* denotes the INR network parameters; where *f*_{ψ} denotes the PP network 620, 720 and ψ denotes the PP network parameters; where *D* denotes a distortion measuring the distance between the image ***x*** and its reconstructed version *x̂*, as produced by the INR network *f**_{θ}*** from the upsampled latent variables *ẑ*, that is, *x̂ = f_{θ}*(*ẑ*); and where R denotes the rate (in bits per pixel) measuring the number of bits that are required to represent a pixel in a bitstream, that is, the number of bits that are required to represent *ŷ*, *θ*, and ψ. The distortion *D* and the rate *R* are balanced by a scalar value denoted by *λ*. In a case where the up-sampling unit 640 is implemented by a neural network, the parameters of that network are also learned and coded into the bitstream 670 to be used by the up-sampling unit 740 when used in an inference mode.

When coding the image ***x**,* therefore, the objective is to find these latent variables *ŷ*, INR network parameters *θ*, and PP network parameters ψ that minimize the coding cost, as follows: ${min}_{\hat{y} , θ , ψ} Cost = {min}_{\hat{y} , θ , ψ} \left(D\left(x,{f}_{θ}\left(\hat{z}\right)\right)+λR\left(\hat{y}, θ, ψ\right)\right) .$ (5) Since the contribution of the INR network parameters *θ* and the PP network parameters ψ to the rate *R* is not as significant as that of the latent variables *ŷ*, only the latter can be considered when minimizing the coding cost, that is, *R*(*ŷ, θ*, ψ ) ≈ *R*(*ŷ*). Furthermore, *R*(*ŷ*) can be replaced by the cross entropy. Thus, equation (5) can be replaced by: ${min}_{\hat{y} , θ , ψ} Cost = {min}_{\hat{y} , θ , ψ} \left(D\left(x,{f}_{θ}\left(\hat{z}\right)\right)-λ {log}_{2} {P}_{ψ}\left(\hat{y}\right)\right) ,$ (6) where *P*_{ψ}(*ŷ*) is the joint distribution of the latent variables *ŷ*.

According to Equation (6), minimizing the coding cost involves minimizing the rate associated with the latent variables. This can be achieved by reducing the amount of information contained in the latent variables at the cost of a less accurate reconstruction (as less information in *ŷ* is likely to increase the distortion *D*)*.* Alternatively, minimizing the coding cost can be achieved by exploiting the distributions of the respective latent variables for their entropy-based coding, as described herein.

Due to the high dimensionality of the latent variables, modeling of the joint distribution of *ŷ*, *P*_{ψ}(*ŷ*), is not tractable. Instead, *P*_{ψ}(*ŷ*) can be factorized as follows: ${P}_{ψ} \left(\hat{y}\right) = {\prod }_{i , j , k} {p}_{ψ} \left(\left.{\hat{y}}_{ijk}\right|{c}_{ijk}^{s}\right) ,$ (7) where ${p}_{ψ} \left(\left.{\hat{y}}_{ijk}\right|{c}_{ijk}^{s}\right)$ denotes a discrete conditional probability of a latent variable at position (i, j, k) conditioned on a corresponding spatial context ${c}_{ijk}^{s}$. Where (i, j) represents the spatial coordinate of a latent variable in a layer *k.* Thus, the rate *R* can be expressed by $R \left(\hat{y}, θ, ψ\right) = - {\sum }_{ijk} {log}_{2} {p}_{ψ} \left(\left.{\hat{y}}_{ijk}\right|{c}_{ijk}^{s}\right) ,$ (8) And the coding cost, therefore, can be expressed by ${min}_{\hat{y} , θ , ψ} Cost = {min}_{\hat{y} , θ , ψ} \left(D\left(x,{f}_{θ}\left(\hat{z}\right)\right)-λ{\sum }_{ijk} {log}_{2} {p}_{ψ} \left(\left.{\hat{y}}_{ijk}\right|{c}_{ijk}^{s}\right)\right) .$ (9)

In practice, the discrete distribution ${p}_{ψ} \left(\left.{\hat{y}}_{ijk}\right|{c}_{ijk}^{s}\right)$ can be modeled by integrating the continuous distribution of the non-quantized latent variable. The continuous distribution of the non-quantized latent variable, denoted by *g*(*y*)*,* can be modeled as a Laplacian distribution, for example. In this case, the PP network 620 learns the expectation parameter, µᵢⱼₖ, and the scale parameter, σᵢⱼₖ, based on the context ${c}_{ijk}^{s}$. Accordingly, the probability of a latent variable *ŷᵢⱼₖ* can be expressed as: ${p}_{ψ} \left(\left.{\hat{y}}_{ijk}\right|{c}_{ijk}\right) = {\int }_{{\hat{y}}_{ijk} - 0.5}^{{\hat{y}}_{ijk} + 0.5} g \left(y\right) dy ,$ (10) where g ≅ 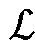 (µᵢⱼₖ, σᵢⱼₖ) denotes a Laplacian distribution. Thus, in the case of a Laplacian distribution, for example, given a context cᵢⱼₖ, the PP network 620 can be trained to produce the corresponding distribution parameters, that is, {µᵢⱼₖ, σᵢⱼₖ} = f_{ψ}(cᵢⱼₖ).

Thus, to obtain the distribution ${p}_{ψ} \left(\left.{\hat{y}}_{ijk}\right|{c}_{ijk}^{s}\right)$ of a currently processed latent variable *ŷᵢⱼₖ,* the spatial context ${c}_{ijk}^{s}$ may be provided by neighboring latent variables. For example, during the decoding process 700, the **PP** network 720 produces the distribution ${p}_{ψ} \left(\left.{\hat{y}}_{ijk}\right|{c}_{ijk}^{s}\right)$ of a latent variable *ŷᵢⱼₖ* (to be decoded from the bitstream 770 by the entropy-based decoder 725) using spatial context ${c}_{ijk}^{s}$ provided by already decoded neighboring latent variables received from the aggregator 730. Preferably, the neighboring latent variables are selected in a way that enables parallel decoding of the different layers of the latent variables (e.g., in a wavefront-like approach).

FIG. 8 is a diagram illustrating the prediction of a latent variable distribution, using a spatial context 800. For the simplicity of the presentation, only one layer 810 of the latent variables is illustrated; however, processes applied to this layer can be similarly applied to the other layers. The example of FIG. 8 illustrates the process of predicting a distribution of a current latent variable (indicated by a black square) to be coded (e.g., by encoder 600) or to be decoded (e.g., by decoder 700). Note that when coding the latent variable, typically, neighboring latent variables from the current frame are available. While when decoding the latent variable, typically, some of the neighboring latent variables from the current frame are not yet available (decoded). This is indicated by the white squares (available latent variables) and the patterned squares (not yet available latent variables).

As illustrated, a spatial context 820 can be constructed based on the latent variables in the spatial neighborhood of the current latent variable 830 - that is, for a current latent variable *ŷᵢⱼₖ* at position (*i, j, k*), latent variables can be selected within a neighborhood located relative to position (*i*, *j*, *k*) (e.g., latent variables grouped by the gray background in FIG. 8) to form the spatial context ${c}_{ijk}^{s}$. The obtained spatial context, ${c}_{ijk}^{s}$, can then be used by the PP network 840 to predict the distribution of the current latent variable, that is, predicting ${p}_{ψ} \left(\left.{\hat{y}}_{ijk}\right|{c}_{ijk}^{s}\right)$. The distribution of the current latent variable can be predicted by estimating the parameters of that distribution (e.g., {µᵢⱼₖ, σᵢⱼₖ}). To that end, in the encoder 600, the PP network 840, 620 can be trained to produce, for each latent variable, the distribution parameters 850 based on the respective spatial context. This training can be done by minimizing the coding cost expressed in equation (9). The training of the PP network 840, 620 results in the PP network parameters ψ. In the decoder 700, the trained PP network 840, 720 can be operated in an inference mode to produce, for each latent variable, the distribution parameters 850 from the respective spatial context 820. The trained PP network 840, 720 operates based on the PP network parameters ψ determined by the encoder during training and provided to the decoder in the bitstream 770.

In the case of a video stream, for example, a hybrid INR network can be used to represent each image of a video frame by a set of latent variables, *ŷ*, that (together with the PP network parameters ψ and the INR network parameters θ) can be coded into a bitstream. To decrease the bitrate of the compressed video, the set of latent variables can be trained to represent a group of video frames (see, e.g., Hyunjik et al., "C3: High-Performance and Low-Complexity Neural Compression from a Single Image or Video," Proceedings of the IEEE/CVF Conference on Computer Vision and Pattern Recognition (CVPR), 2024, pp. 9347-9358). However, such an approach makes it difficult to randomly access individual frames at the decoder end. In addressing this shortcoming, Leguay et al. propose a predictive hybrid INR network applicable to individual frames (see, Leguay et al., Cool-chic video: Learned video coding with 800 parameters, Data Compression Conference (DCC) 2024, IEEE, pp 23-32, 2024, hereinafter "Leguay"). Principles of the predictive hybrid INR network proposed in Leguay are described in EP Patent Application 24306384.9, filed on August 21, 2024, which is incorporated herein by reference in its entirety.

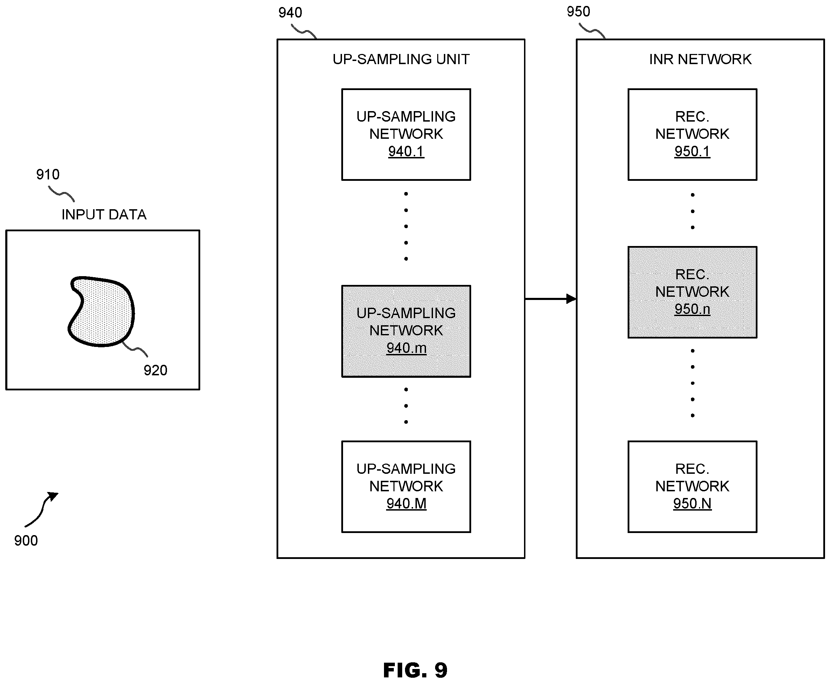

As described above, a hybrid INR network can be trained to predict, from latent variables, corresponding samples of the input data. Thus, during training, latent variables of all layers (processed by the hybrid INR network) as well as parameters of all networks (employed by the hybrid INR network) are learned together to represent a given data. Since data, capturing a real-world (or computer-generated) scene, typically contain data regions having different characteristics, it may be advantageous to learn these regions through respective latent variables and through parameters of respective network(s). In such an approach, the input data can be partitioned into data regions and each region can be assigned with a configuration of networks through which that region is predicted, as described in EP Patent Application 25305121.3, the content of which is incorporated herein by reference in its entirety. The assignment of a configuration to a region of the input data is further described in reference to FIG. 9.

FIG. 9 is a block diagram illustrating the assignment of a configuration to a partition of data to be encoded 900. In the example of FIG. 9, an up-sampling unit 940 (e.g., unit 640, 740) comprises *M* up-sampling networks (or *M* up-sampling units, each applying a different technique and/or parameters to sub-sample given data). Additionally shown, an INR network 950 (e.g., INR network 650, 750) that comprises N reconstruction networks. Input data 910, to be predicted by a hybrid INR network, may be partitioned into *Q* data regions - that is, *Q* partitions {*P_{q}, q =* 1: *Q*)}. Each partition, *P_{q}* 920, may then be assigned with a configuration. A configuration may include an up-sampling network (or an up-sampling unit) and a reconstruction network. For example, referring to FIG. 9, a partition 920 may be assigned with a configuration that includes an up-sampling network 940.m and a reconstruction network 950.n (as demonstrated by the grayed elements). This configuration (940.m and 950.n) may be used by the hybrid INR network when processing latent variables that are associated with (or representative of) input data confined by the partition 920. Note that one or more coding-tree-units (CTUs) may constitute a partition in the case where the input data is of a video frame.

Hence, encoding input data by training a hybrid INR network with respect to each region of the data requires not only partitioning the data, but also informing the decoder about the partitions used. Typically, this is done by coding information into the bitstream that identifies the partitions, leading to an increase in the bitrate. According to aspects disclosed herein, partitioning of an input data may be performed based on the latent variables. Although partitioning may be changed during training, the ultimate partitioning is based on the latent variables coded into the bitstream. Since these latent variables are available to the decoder, they can be used by the decoder to generate the same partitions lastly used by the encoder, saving the need to code them into the bitstream. In this case, the decoder may be informed of the partitioning technique applied by the encoder and then, using that technique, the decoder can generate the partitions based on the decoded latent variables. Various techniques are described herein for partitioning data based on the values or the sparsity pattern of the latent variables, as further described below.

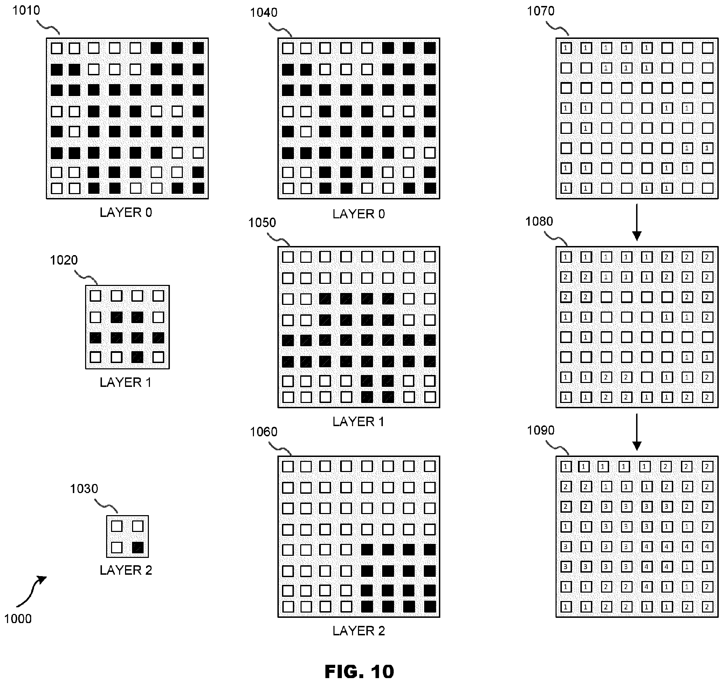

In an aspect, the partitioning of the input data may be based on a sparsity pattern of the latent variables. This may be performed according to different techniques and their variants as further described herein. Two techniques are firstly described in reference to FIGS. 10-11. In these figures only three layers of latent variables are presented for the simplicity of the presentation. However, in practice, the number of layers is typically higher, and may be, for example, 16 or more. Generally, in setting the number of layers, a tradeoff is made between an increase in reconstruction quality and an increase in computational burden and bitrate (the latter being driven by an increase in architecture complexity of the networks employed and by the resulted increase in the number of network parameters being coded into the bitstream).

FIG. 10 is a diagram illustrating a first partitioning technique. In the example of FIG. 10, three hierarchical layers 1010, 1020, 1030 of latent variables are presented. The corresponding upsampled layers of the latent variables 1040, 1050, 1060 are also presented, providing a dense volumetric representation. Any up-sampling method may be used to up-sample the latent variables, such as a nearest-neighbor, a linear, a bilinear, a bicubic, or a trilinear interpolation method as well as interpolation methods employing a neural network. In FIG. 10, the small squares represent respective latent variables, the value of which may be either zero (denoted by a black square) or nonzero (denoted by a white square). The partitioning of the data may be derived from the sparsity patterns of the latent variables. This may be achieved by grouping the up-sampled latent variables that have a nonzero value starting with the highest resolution layer and progressing through the remaining layers in a decreasing resolution level order.

Specifically, starting with layer 0 1040, all latent variables that have a nonzero value (white squares) at this layer are grouped; this grouping is indicated 1070 by the index 1. Next, moving to layer 1 1050, all (not yet grouped) latent variables that have a nonzero value at this layer are grouped; this grouping is indicated 1080 by the index 2. Concluding with layer 2 1060, all (not yet grouped) latent variables that have a nonzero value at this layer are grouped; this grouping is indicated 1090 by the index 3. The remaining latent variables are grouped together; this grouping is indicated 1090 by the index 4. Thus, latent variables that are indexed by the same index number, *q*, form a partition, *P_{q}*. These latent variables (across all layers 0-2) and the data samples they represent correspond to this partition.

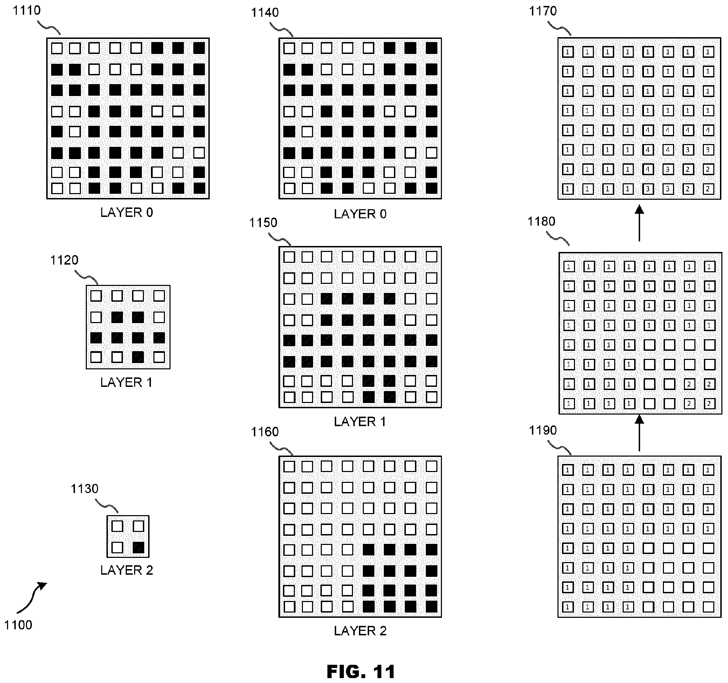

FIG. 11 is a diagram illustrating a second partitioning technique. In the example of FIG. 11, three hierarchical layers 1110, 1120, 1130 of latent variables are presented. The corresponding upsampled layers of the latent variables 1140, 1150, 1160 are also presented, providing a dense volumetric representation. In this technique of partitioning the up-sampled latent variables that have a nonzero value are grouped starting with the lowest resolution layer and progressing through the remaining layers in an increasing resolution level order.

Specifically, starting with layer 2 1160, all latent variables that have a nonzero value (white squares) at this layer are grouped; this grouping is indicated 1190 by the index 1. Next, moving to layer 1 1150, all (not yet grouped) latent variables that have a nonzero value at this layer are grouped; this grouping is indicated 1180 by the index 2. Concluding with layer 1 1140, all (not yet grouped) latent variables that have a nonzero value at this layer are grouped; this grouping is indicated 1170 by the index 3. The remaining latent variables are grouped together; this grouping is indicated 1170 by the index 4. Thus, latent variables that are indexed by the same index number, *q*, form a data partition, *P_{q}*. These latent variables (across all layers 0-2) and the data samples they represent correspond to this partition.

A third partitioning technique may be employed by extending the grouping results obtained by the techniques 1000, 1100 described above in reference to FIGS. 10 and 11. For example, the grouping obtained by these methods 1090 and 1170 may be extended by further grouping the latent variables based on comparisons of latent variables across layers. For example, starting with grouping 1170, where the values of corresponding latent variables in layer 2 and layer 1 are both nonzero, the corresponding index in 1170 can be replaced by index 5. Furthermore, where the values of corresponding latent variables in layer 2, layer 1, and layer 0 are all nonzero, the corresponding index in 1170 can be replaced by 6.

In a fourth partitioning technique, the latent variables across all up-sampled layers are compared. Then, latent variables can be indexed based on the number of collocated latent variables (e.g., in layers 0-2 of FIGS. 10 and 11) that are not zero. Accordingly, the number of groups may be as high as the number of layers. However, not all layers may be considered when using this technique.

In a variant, the latent variables may be grouped based on their values (as described above) and then based on the adjacency of the resulted groups. This may be done to prevent fragmented partitioning of the data. For example, the grouping 1090 and 1170 obtained by the partitioning techniques described in reference to FIG. 10 and FIG. 11, resulted in a fragmented group, indexed by 1. In this case, when latent variables grouped by the same index belong to non-adjacent regions, they can be further split into contiguous groups each indexed by another number.

Partitioning techniques may be performed based on latent variables from hierarchical layers (1010, 1020, 1030), based on latent variables from the upsampled layers (1040, 1050, 1060), or a combination thereof. In a variant, instead of considering the values of these latent variables, values given by function(s) of the latent variables may be considered. Thus, partitioning techniques may be based on the absolute values of the latent variables. Furthermore, to perform the grouping of latent variables, partitioning techniques may consider whether the latent variables are different than a fixed value, below or above a threshold, or within a range; different fixed values, thresholds, or ranges may be used with respect to each layer or with respect to each indexed group. For example, referring to FIG. 10, the group indexed by 1 could include latent variables having a value 1, the group indexed by 2 could include latent variables having a value between 2 and 4; the group indexed by 3 could include latent variables having a value between 5 and 10; and the group indexed by 4 could include latent variables having a value above 10. Note that multiple partitioning techniques may be used, in combination or independently, to partition the input image. For example, some partitions may be obtained by one technique and some other partitions may be obtained by another partitioning technique.

Following the partitioning of the input data, information indicating the partitioning technique used (including related parameters) may be coded into the bitstream, unless such information is fixed or is available to the decoder by a previous transmission or from another source. However, the partitions themselves, {*P_{q}, q = 1: Q)},* need not be provided to the decoder but can be generated based on the decoded latent variables during decoding.

Given the partitions of input data, the encoder may be configured to assign to each partition a configuration (see, FIG. 9). These assignments may be coded into the bitstream, unless they are fixed or available to the decoder by a previous transmission or from another source. The assignments may be derived from the latent variables and/or from the partitions, and as such can be inferred by the decoder. In an aspect, the partitions may be ordered, for example, by the indices with which the latent variables were grouped (see, FIGS. 10 and 11). In that case, the assignments associated with these partitions may be ordered accordingly when coded into the bitstream. The processing of a partition by its assigned configuration may include a first step that prunes part of these corresponding latent variables, thereby reducing the input vector processed by the configuration. In yet another aspect, a configuration is assigned to a partition based on the size of that partition.

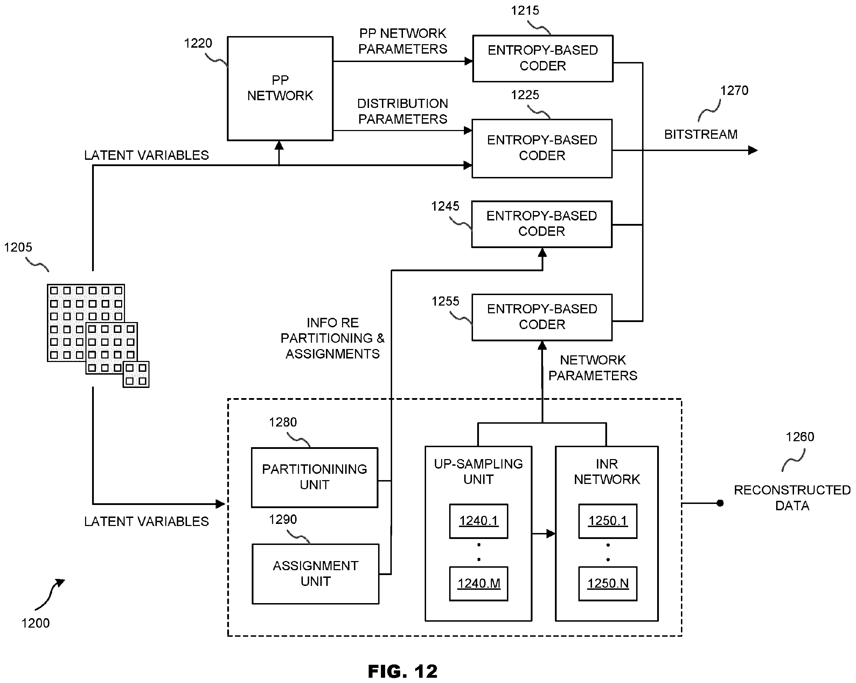

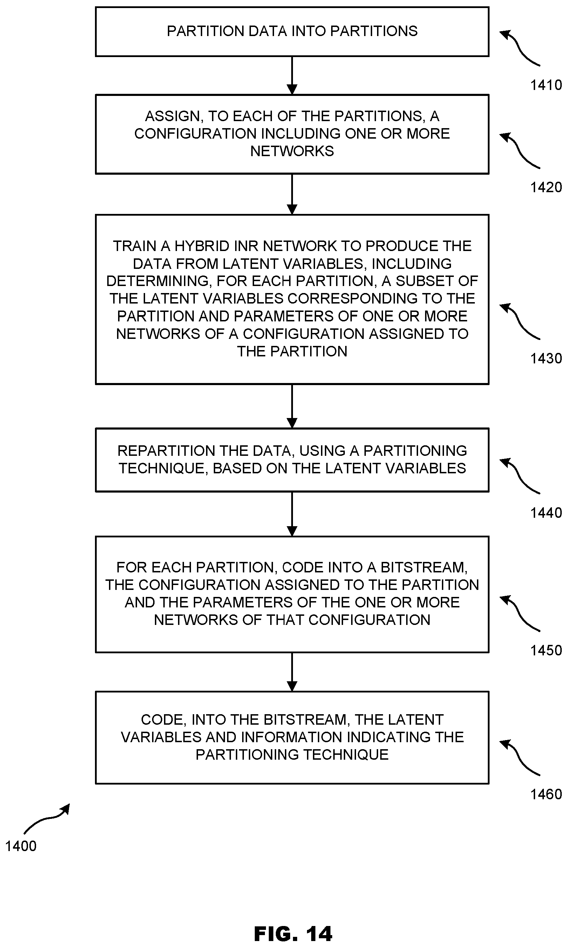

FIG. 12 is a block diagram illustrating an example video encoder applying an extended hybrid INR network 1200. The encoder illustrated in FIG. 12 is an extension of the encoder described in reference to FIG. 6. Thus, in FIG. 12, the up-sampling unit 640 and the INR network 650 are represented by up-sampling networks (or units) 1240.1-M and reconstruction networks 1250.1-N, out of which different configurations can be formed (as explained in reference to FIG. 9). A partitioning unit 1280 is added to represent the partitioning operation performed, for example according to one or more of the partitioning techniques described herein. An assignment unit 1290 is also added to represent the assignment operation according to which a configuration (e.g., 1240.m and 1250.n) may be assigned to a partition *P_{q}*. Information regarding the partitioning technique used and the assignments made may be coded by the added entropy-based coder 1245. Steps for carrying out the encoding of input data are described below with respect to FIG. 14.

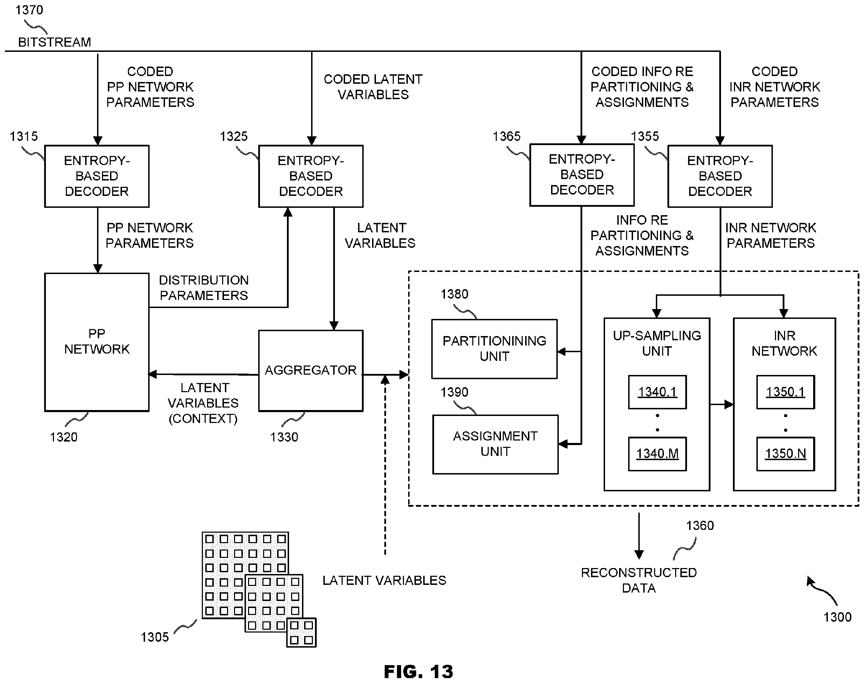

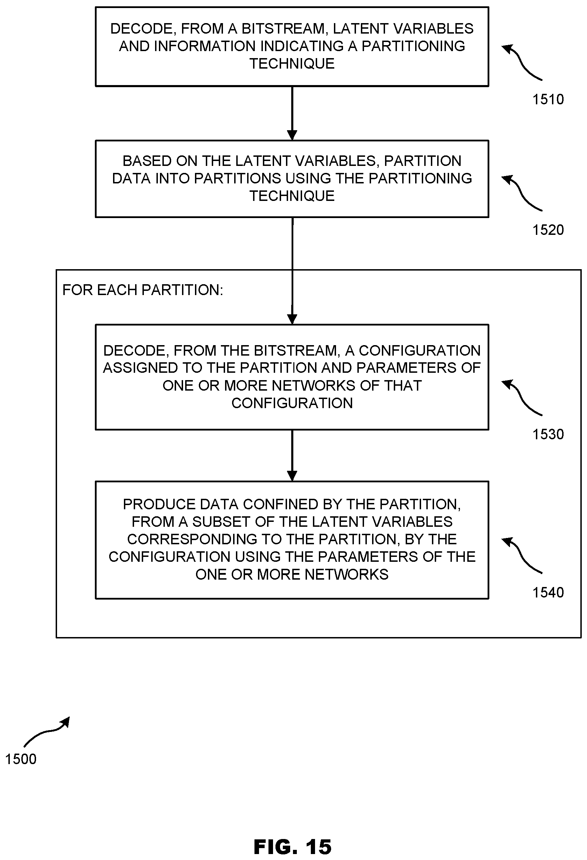

FIG. 13 is a block diagram illustrating an example video decoder applying an extended hybrid INR network 1300. The decoder illustrated in FIG. 13 is an extension of the decoder described in reference to FIG. 7. Thus, in FIG. 13, the up-sampling unit 740 and the INR network 750 are represented by up-sampling networks (or units) 1340.1-M and reconstruction networks 1350.1-N, out of which different configurations can be formed (as explained in reference to FIG. 9). A partitioning unit 1380 is added to represent the partitioning operations performed according to one or more of the partitioning techniques described herein. An assignment unit 1390 is also added to represent the assignment operation according to which a configuration (e.g., 1340.m and 1350.n) may be assigned to a partition *P_{q}*. Information regarding the partitioning technique used by the encoder and the assignments made by the encoder may be decoded from the bitstream by the added entropy-based decoder 1365. Steps for carrying out the reconstruction of the input data are described below with respect to FIG. 15.

FIG. 14 is a flowchart of an example method for encoding data 1400. The method 1400 may be applied for encoding data of a currently encoded frame into a bitstream. The data (i.e., input data) may be an image of a video frame as well as volumetric or surface data representing object(s) over time. The method may begin, in step 1410, with the partitioning of the data into partitions, where each partition confines a region of the data. For example, a partition of the data may contain one or more coding-tree-units. Then, in step 1420, a configuration may be assigned to each partition. Each configuration may include one or more networks (e.g. an up-sampling network and a reconstruction network or an up-sampling unit and a reconstruction network). Next, in step 1430, a hybrid INR network may be trained to produce the data to be encoded from latent variables. The training may include determining, for each partition, a subset of the latent variables corresponding to the partition and parameters of one or more networks of a configuration assigned to the partition. Based on the latent variables (that is, latent variables from all the subsets corresponding to the partitions) that were learned by the training, in step 1440, repartitioning of the data may be performed using a partitioning technique. Next, for each partition, in step 1450, the configuration assigned to the partition and the parameters of the one or more networks of that configuration may be coded into the bitstream. Additionally, in step 1460, the latent variables and information indicating the partitioning technique used may be coded into the bitstream.

In an aspect, the training 1430 may include iteratively performing the determining step (that is, determining a subset of the latent variables corresponding to each partition and determining the parameters of the one or more networks of a configuration assigned to each partition) and repartitioning of the data based on the determined latent variables. In another aspect, the training may further include enforcing a constant sparsity pattern of the latent variables, so that additional repartitioning of the data may not be needed when the partitioning relies on the sparsity pattern of the latent variables (and not the values of the latent variables). In yet another aspect, the training may involve iteratively computing a coding cost (e.g., as in equations (11) or (12)), including minimizing a difference between a sample of the data at pixel coordinates and a reconstruction of that sample, where the reconstruction of the sample is produced by mapping the pixel coordinates to an index of a partition and by evaluating a configuration identified by the index. In a variant, the mapping of pixel coordinates to an index of a partition may change during the training.

The partitioning (in step 1440 and possibly in step 1410) may be according to a partitioning technique performed by sequentially processing layers of latent variables. Accordingly, for a first layer, a first partition may be generated by grouping latent variables that satisfy a condition into a first group; and for a second layer, a second partition may be generated by grouping latent variables that satisfy a condition into a second group, where a latent variable in the second group has no corresponding latent variable in the first group. As described in reference to FIG. 10, the first layer may be of higher resolution than the second layer; and as described in reference to FIG. 11 the first layer may be of lower resolution than the second layer. Furthermore, a third partition may further be generated by grouping latent variables that satisfy a condition into a third group, where each latent variable in the third group corresponds to latent variables in one or more layers that collectively satisfy the condition. Alternatively, or in a addition, a partition may be generated by grouping latent variables, each having the same number of corresponding latent variables across the layers that satisfy a condition. Note that a condition used for grouping latent variables may be whether a latent variable, of the latent variables, is different than a fixed value, below a predetermined threshold, above a predetermined threshold, or within a predetermined range.

The initial partitioning, in step 1410, may be performed according to any clustering method applied to the input data. Alternatively, or in addition, the initial partitioning of the data may be performed based on latent variables (or based on a sparsity pattern of latent variables), either provided from another source or computed by the encoder. In the latter case, the latent variables may be computed by training a hybrid INR network (e.g., as described with respect to FIG. 6) using one configuration of an up-sampling network (e.g., unit 640) and an INR network (e.g., 650). In a further aspect, these latent variables may be obtained by one of several reconstruction networks. Each of these networks may be tested to learn the latent variables; those latent variables learned by the network resulting in the best performance (e.g., least coding cost) will be used.

The assignment of configurations to respective partitions, in step 1420, may be performed by the assignment unit 1290 of the encoder 1200. This may involve, for a partition (e.g., 920), assigning a configuration including an up-sampling network (e.g., 940.m) and a reconstruction network (e.g., 950.n), as described in reference to FIG. 9. Assigning a configuration to a partition may involve evaluating the performance of several available configurations - each including a different combination of an up-sampling network (e.g., any one of 940.1-940.M) and a reconstruction network (e.g., any one of 950.1-950.N) - with respect to at least a part of the partition. In an aspect, the performance of a configuration can be tested with respect to at least a part of a partition and with respect to a part of the input data outside the partition to provide a reference. In another aspect, a configuration, to be assigned to a partition, may be selected based on the characteristics of the input data confined by the partition, for example through an expert designed algorithm or a machine learning model. As an example, the best assignment of a configuration to a partition can be (exhaustively) searched among all possible assignments to find the one that minimizes a coding cost (e.g., in terms of bitrate and/or distortion).

To predict the input data, in step 1430, the hybrid INR network may be trained using the assigned configurations to respectively process data confined by respective partitions. The training may be generally performed as described with respect to FIG. 6, except that, for a partition of the input data, the partition's assigned configuration may be employed to learn latent variables representative of that partition and to learn the network parameters of the assigned configuration.

The hybrid INR network may be trained by minimizing a coding cost, as in equation (4), using a distortion *D* expressed as follows: $D = \frac{1}{WH} {\sum }_{i ∈ W , j ∈ H} {\left(x\left(i, j\right)-{f}_{{θ}_{{C}_{q}}}^{{C}_{q}}\left(\hat{z}\left(i, j\right)\right)\right)}^{2} ,$ (11) where ***x*** (i.e., input data) denotes an image to be coded of *H* height and *W* width; where *C_{q}* denotes a configuration that is assigned to a partition *P_{q}*; where *q = c_{i,j}* and *c_{i,j}* is a function that maps a pixel of coordinates *(i,j)* to an index *q* of a partition that the pixel belongs to. The function ${f}_{{θ}_{{C}_{q}}}^{{C}_{q}}$ represents the operation of the configuration *C_{q}*. This function is defined by the configuration's network parameter *θ_{c_{q}}* determined during training. As formulated by equation (11), ${f}_{{θ}_{{C}_{q}}}^{{C}_{q}} \left(\hat{z}\left(i, j\right)\right)$ provides a reconstructed pixel *x̂*(*i*, *j*) as a function of up-sampled latent variables *ẑ*(i, j) across *K* layers (i.e., *ẑ*(i, j) = {*ẑ*(i, j, *k*), *k* = 0: (*K* - 1)}). Typically, all the configurations *C*₁, *..., C_{Q}* (assigned to respective partitions *P*₁, *... , P_{Q}*) of the hybrid INR network are trained together to learn the latent variables and to learn all network parameters *θ* = {*θ*_{*C*₁}, ... , *θ_{C_{Q}}*} as well as ψ (of the PP network 1220). Note that applying equation (11) in the computation of the coding cost allows for implicit partitioning of the data during the training.

In an aspect, the input data may be repartitioned during the training in accordance with changes made to the latent variables during the training. That is, the mapping *q = c_{i,j}* may be modified during training. In such a case, the following distortion may be used: $D = \frac{1}{WH} {\sum }_{i ∈ W , j ∈ H , c ∈ C} b \left(i, j, q\right) {\left(x\left(i, j\right)-{f}_{{θ}_{{C}_{q}}}^{{C}_{q}}\left(\hat{z}\left(i, j\right)\right)\right)}^{2} ,$ (12) where during the training, the value of *b*(*i, j, q*) is maintained to satisfy: ${\sum }_{q ∈ Q} b \left(i, j, q\right) = 1 ∀ i ∈ W , j ∈ H .$ (13) The function *b*(*i, j, q*) serves as an indicator function, indicating how likely it is that pixel (*i*, *j*) belongs to partition *P_{q}*.

A partitioning may be performed so that a succession of *K* upsampled latent values 2(i, j, k) where *k =* 0,1, *... , K -* 1 and a pixel *(i,j)* belongs to a partition *P_{q}*, if *ẑ*(i, j, k) = 0 ∀ *k* ∈ {0, ... (*k_{q}* - 1)} and *ẑ*(*i*, *j*, *k_{q}*) ≠ 0 (see FIG. 10). In such a case, *b*(*i*, *j*, *q*) may be expressed as: $b \left(i, j, q\right) = \left(1-d\left(\hat{z}\left(i, j, {k}_{q}\right),0\right)\right) {\prod }_{k ∈ \left\{0,…,\left({k}_{q}-1\right)\right\}} d \left(\hat{z}\left(i, j, k\right),0\right)$ (14) where *d*(*ẑ*(i, j, k), 0) is a differentiable function designed to approximate the Dirac function to make the optimization problem easier. Thus, *d*(*ẑ*(i, j, k), 0) may be approximated using one or more of a Gaussian function, an exponential function, a sinc function, a rectangular function, or a normalized exponential function, or a combination thereof. In some variants, these functions may be adapted when the partitioning is based on the presence or absence of a value different than 0 (e.g. +1 or -1), multiple values or a range of values. For example, if the partitioning is based on the value *a* rather than 0, the function used might be *d*(*ẑ*(i, j, k) - *a,* 0). If the partitioning is based on the value *a* or b rather than 0, the function used might be max [*d*(*ẑ*(i, j, k) - *a*, 0), *d*(*ẑ*(i, j, k) - *b,* 0)] instead of *d*(*ẑ*(i, j, k), 0). If the partitioning is based on the range [*a*,*b*] rather than 0, the function used might be min [*d*(min(*ẑ*(i, j, k), *a*) *- a*, 0), *d*(max (*ẑ*(i, j, k), *b*) - b, 0)] instead of *d*(*ẑ*(i, j, k), 0) . In some variants, the term (1 - *d*(*ẑ*(i, j, *k_{q}*), 0)) may be approximated instead of *d*(*ẑ*(i, j, k), 0).

In an aspect, the hybrid INR network may be trained in multiple stages. For example, in a first stage, a single configuration (e.g., including 940.1 and 950.1) may be trained to predict the input data. Then, in following stages, the input data may be iteratively partitioned, testing different splits of the data into partitions and assigning different configurations to respective partitions. In another aspect, the hybrid INR network may be trained iteratively by progressively adding layers of latent layers to obtain additional partitions with each latent layer added.

In an aspect, the training may involve quantization aware training. Quantization aware training means that the training procedure (over a large set of values) is modified to account for the limited set of quantized values that will be used later. This can be done by using any off-the-shelves quantization aware training procedure, for example done by adding the value of each random variable a random noise sampled uniformed in [-*I_{quant}*/2, *I_{quant}*/2], where *I_{quant}* is the quantization step. The training procedure may also involve steps to account for the coding of the probability model, such as quantization, pruning etc., for example by applying these steps (e.g. quantizing or pruning the network weights), using additional noise (like above but applied to the network weights) and/or adding specific terms to the loss function such as the rate of the network parameters.

The partitioning of the data may be performed by the partitioning unit 1280 of the encoder 1200. This may include the initial partitioning in step 1410, repartitioning that may take place during the training (as the latent variables are being learned), and the repartitioning in step 1440 (based on the final latent variables). To repartition the data based on the latent variables one or more of the partitioning techniques described herein (and/or their variants) may be applied. A predefined partitioning technique may be used or multiple partitioning techniques (applied independently or in combination) may be applied to select the best partitioning result according to criteria, such as the number of partitions, the integrity of the partition, partition maximum area, and/or partition minimum area. In an aspect, choosing the best partitioning technique may be based on the characteristics of the input data, for example through an expert designed algorithm or a machine learning model trained for that task.

In yet another aspect, the training 1430 may be configured (right at the beginning or at some intermediate point during the training) to ensure that the sparsity pattern of the latent variable is kept unchanged so that changes to the latent variables (being learned) do not affect the partitioning. In this aspect, the training may be performed so that latent variables that are zero are not learned (stay zero) and the values of the other latent variables may be forced away from zero (e.g., by using a barrier loss or quantizing the latent variables' values away from zero). Hence, if the sparsity pattern of the latent variables is not being changed, there may be no need for further repartitioning of the data during the training.

Next, in steps 1450 and 1460, the following information may be coded into a bitstream to facilitate data reconstruction. Parameters of networks employed by the hybrid INR network may be coded 1450 into the bitstream (e.g., using entropy-based coder 1255). This includes coding the parameters of the networks of those configurations that were assigned 1420 to partitions of the input data (that is, *θ* = {*θ*_{*C*₁}, *..., θ_{C_{Q}}*}). Coding network parameters may be done by a neural compression codec such as Neural Network Coding (NNC)/ ISO/IEC 15938-17 or MPEG-7 part 17 or simply by quantizing the weights and/or pruning some neurons from the network(s). The latent variables may be coded into the bitstream (e.g., using entropy-based coder 1225) based on their distributions. These distributions may be provided by the **PP** network 1220, the parameters of which (that is, ψ ) may also be coded into the bitstream (e.g., by entropy-based coder 1215). Information about the partitioning technique used and about the assignments of configurations to respective partitions may also be coded into the bitstream (e.g., by entropy-based coder 1245).

The procedures above mainly describes a sequential approach for solving the optimization problem involved in the aforementioned training of the hybrid INR network. However, there are additional possible variants of this procedure. For example, several elements of the coding cost (see equations (11) and (12)) can be optimized at the same time. The partitioning operation and the assignment of configurations to the resulting partitions can be adjusted (optimized) during the training, using any optimization algorithm, such as greedy search, gradient descent of a specific loss, genetic algorithms, or machine learning algorithms.

In an aspect, the assignment of a configuration to a partition can be made based on the coding result of another partition using another or the same configuration, for example by using a reinforcement learning or an active learning algorithm. In yet another aspect, computations carried out in one step may be beneficial, and therefore may be reused, for another step. Some approaches (for selecting a partitioning technique and/or for assigning configurations to respective partitions) may require the training and evaluation of the hybrid INR network to assess the performance of such approaches. In that case, computations performed in the training and in the evaluation may be reusable; and therefore may be used by several steps performed in assessing these approaches.

FIG. 15 is a flowchart of an example method for decoding data 1500. The method 1500 may be applied for decoding from a bitstream data of a currently decoded frame. The method may begin, in step 1510, with the decoding from the bitstream latent variables and information indicating a partitioning technique. Based on the decoded latent variables, in step 1520, the data may be partitioned, using the decoded partitioning technique, into partitions. Each partition confines a region of the data. Next, for each partition: in step 1530, a configuration assigned to the partition may be decoded from the bitstream as well as parameters of one or more networks of that configuration; and, in step 1540, data confined by the partition may be produced, from a subset of the latent variables corresponding to the partition, by the configuration (assigned to the partition) using the parameters of the one or more networks of that configuration.

Hence, in steps 1510 and 1530, information required for the reconstruction of the input data may be decoded from the bitstream by a decoder 1300. The parameters of the networks employed by the hybrid INR network may be decoded from the bitstream. This includes decoding the parameters of the networks of those configurations that were assigned to partitions of the input data, that is, *θ* = {*θ*_{*C*₁}, ... , *θ_{C_{Q}}*} (e.g., using entropy-based decoder 1355). Decoding network parameters may also be done by a neural compression codec such as Neural Network Coding (NNC)/ ISO/IEC 15938-17 or MPEG-7 part 17 or simply by quantizing the weights and/or pruning some neurons from the network(s). The latent variables may be decoded from the bitstream (e.g., using entropy-based decoder 1325) based on their distributions. These distributions may be provided by the PP network 1320, the parameters of which (that is, ψ ) may also be decoded from the bitstream (e.g., using entropy-based decoder 1315). Information indicating a partitioning technique and assignments of configurations to respective partitions may also be decoded from the bitstream (e.g., using entropy-based decoder 1365).

In step 1520, the data to be reconstructed may be partitioned based on the decoded latent variables. This partitioning may be informed by the decoded information indicating a partitioning technique. It may also be informed by information already known to the decoder, either because it is standardized, obtained previously, or transmitted separately (not in the bitstream). The partitioning performed by the decoder follows the partitioning (e.g., of step 1440) performed by the encoder as these partitioning are performed based on the same latent variables.

Following partitioning, configurations, assigned to respective partitions, are evaluated to produce a reconstructed version of the input data. To that end, in step 1530, the configuration assigned to the partition is decoded from the bitstream together with the parameters of one or more networks of the configuration; and, in step 1540, for each partition, a subset of the latent variables corresponding to the partition may be fed into the configuration assigned to the partition to produce a prediction of the data confined by that partition.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

## Claims

1. A method, comprising:
encoding, into a bitstream, data of a currently encoded frame, the encoding comprises:
partitioning the data into partitions;
assigning, to each of the partitions, a configuration including one or more networks;
training a hybrid INR network to produce the data from latent variables, the training includes:
determining, for each partition, a subset of the latent variables corresponding to the partition and parameters of one or more networks of the configuration assigned to the partition;
repartitioning the data, using a partitioning technique, based on the latent variables;
for each partition, coding into the bitstream, the configuration assigned to the partition and the parameters of the one or more networks of that configuration; and
coding, into the bitstream, the latent variables and information indicating the partitioning technique.

2. A method, comprising:
decoding, from a bitstream, data of a currently decoded frame, the decoding comprises:
decoding, from the bitstream, latent variables and information indicating a partitioning technique;
partitioning, based on the latent variables, the data into partitions using the partitioning technique; and
for each partition,
decoding, from the bitstream, a configuration assigned to the partition and parameters of one or more networks of that configuration, and
producing data confined by the partition, from a subset of the latent variables corresponding to the partition, by the configuration using the parameters of the one or more networks.

3. An apparatus, comprising:
at least one processor; and
memory storing instructions that, when executed by the at least one processor, cause the apparatus to encode, into a bitstream, data of a currently encoded frame, the encoding comprises:
partitioning the data into partitions,
assigning, to each of the partitions, a configuration including one or more networks,
training a hybrid INR network to produce the data from latent variables, the training includes:
determining, for each partition, a subset of the latent variables corresponding to the partition and parameters of one or more networks of the configuration assigned to the partition,
repartitioning the data, using a partitioning technique, based on the latent variables,
for each partition, coding into the bitstream, the configuration assigned to the partition and the parameters of the one or more networks of that configuration, and
coding, into the bitstream, the latent variables and information indicating the partitioning technique.

4. An apparatus, comprising:
at least one processor; and
memory storing instructions that, when executed by the at least one processor, cause the apparatus to decode, from a bitstream, data of a currently decoded frame, the decoding comprises:
decoding, from the bitstream, latent variables and information indicating a partitioning technique,
partitioning, based on the latent variables, the data into partitions using the partitioning technique, and
for each partition,
decoding, from the bitstream, a configuration assigned to the partition and parameters of one or more networks of that configuration, and
producing data confined by the partition, from a subset of the latent variables corresponding to the partition, by the configuration using the parameters of the one or more networks.

5. The method according to claim 1, or the apparatus according to claim 3, wherein the training includes iteratively performing the determining step and repartitioning the data based on the determined latent variables.

6. The method according to any one of claims 1 or 5, or the apparatus according to any one of claims 3 or 5, wherein the training further includes enforcing a constant sparsity pattern of the latent variables.

7. The method according to any one of claims 1 or 5-6, or the apparatus according to any one of claims 3 or 5-6, wherein the training comprises iteratively computing a coding cost, including:
minimizing a difference between a sample of the data at pixel coordinates and a reconstruction of that sample, wherein the reconstruction of the sample is produced by mapping the pixel coordinates to an index of a partition and by evaluating a configuration identified by the index.

8. The method according to claim 7, or the apparatus according to claim 7, wherein the mapping of pixel coordinates to an index of a partition changes during the training.

9. The method according to claim 1 or 2, or the apparatus according to claim 3 or 4, wherein a configuration, of the configurations assigned to respective partitions, comprises an up-sampling network and a reconstruction network or an up-sampling unit and a reconstruction network.

10. The method according to any one of claims 1, 2 or 9, or the apparatus according to any one of claims 3, 4 or 9, wherein the partitioning technique is performed by sequentially processing layers of latent variables, wherein:
for a first layer, a first partition is generated by grouping latent variables that satisfy a condition into a first group; and
for a second layer, a second partition is generated by grouping latent variables that satisfy a condition into a second group, wherein a latent variable in the second group has no corresponding latent variable in the first group.

11. The method according to claim 10, or the apparatus according to claim 10, wherein the first layer is of higher resolution than the second layer.

12. The method according to claim 10, or the apparatus according to claim 10, wherein the first layer is of lower resolution than the second layer.

13. The method according to any one of claims 1, 2 or 9-12, or the apparatus according to any one of claims 3, 4 or 9-12, wherein:
a third partition is further generated by grouping latent variables that satisfy a condition into a third group, wherein each latent variable in the third group corresponds to latent variables in one or more layers that collectively satisfy the condition.

14. The method according to any one of claims 1, 2 or 9, or the apparatus according to any one of claims 3, 4 or 9, wherein the partitioning technique is performed by processing layers of latent variables, wherein:
a partition is generated by grouping latent variables, each having the same number of corresponding latent variables across the layers that satisfy a condition.

15. The method according to any one of claims 1, 2 or 10-14, or the apparatus according to any one of claims 3, 4 or 14, wherein a condition that is used for grouping latent variables is whether a latent variable, of the latent variables, is different than a fixed value, below a predetermined threshold, above a predetermined threshold, or within a predetermined range.
